# EUROPEAN PATENT SPECIFICATION

(11) **EP 3 799 015 B1**
(45) Date of publication and mention of the grant of the patent: **11.01.2023**
(21) Application number: 19807877.6
(22) Date of filing: 20.05.2019
(51) Int. Cl.: G09F 19/12, G02B 3/00, G03B 35/00, G09F 11/02, G09F 19/02, F16M 11/04, F16M 11/10, F16M 11/18, G02B 27/06

(54) **MODULAR ROTATING IMAGE DISPLAY APPARATUS**
MODULARE DREHBARE BILDANZEIGEVORRICHTUNG
APPAREIL D`AFFICHAGE D`IMAGE ROTATIVE MODULAIRE

(30) Priority: 22.05.2018 JP 2018098335
(43) Date of publication of application: 31.03.2021
(73) Proprietor: Grapac Japan Co., Inc., Tokyo 131-0034 (JP)
(72) Inventor: YUMOTO, Yoshihide, Tokyo 131-0034 (JP)
(74) Representative: Cabinet Beau de Loménie
(86) International application number: PCT/JP2019/019917
(87) International publication number: WO 2019/225545

(56) References cited:
- WO-A1-2013/062496
- JP-A- 2006 235 458
- JP-A- 2006 235 458
- JP-A- 2013 025 043
- JP-A- 2015 075 672
- JP-U- S58 115 778
- US-A- 3 755 936
- US-A- 5 822 900

## Description

### [Technical Field]

The present invention relates to a modular rotating image display apparatus including an image display sheet that has a lens sheet on which a lens array is formed and a lens-corresponding image which corresponds to the lens sheet, where the apparatus is configured to be assembled and disassembled.

### [Background Art]

As a display for observing optical effect images such as changing or moving images, for example, an existing one may include a plate component one side of which has been subjected to lenticular lens processing and a card printed with a pattern corresponding to a lenticular lens, where the plate component and the card are bonded to each other. According to the display configured in this manner, for example, when it is hung on a wall and viewed from the front, then the advertising effect can be increased by the fact that the pattern appears as if it moved in accordance with the movement of the observer's line of sight by virtue of the lenticular lens processing. On the other hand, according to another existing one, a pattern is allowed to appear as if it moved to the observer's eyes by changing the angle at which the observer views the pattern through movement of the display as such by a motor or the like (Patent Literature 1).

### [Citation List]

[Patent Literature 1] Japanese Patent Application Laid-Open No. 2006-235458

US3755936 discloses a rotating image display of the prior art.

### [Summary of Invention]

### [Technical Problem]

In order to make the pattern appear to move without depending on the movement of the observer's line of sight, it is necessary to change the viewing angle, and rotational driving by external power has been proposed. However, these are limited to small ones such as the size of a 15 cm ruler, or are suitable for installation type installed in stores, but there are no general postcard sizes or other sizes suitable for human visual recognition. If the postcard size is assumed to be four, it is necessary to provide a motor, a power supply unit, a display unit, etc., and use a screw or an adhesive to form a display, resulting in a large rotating body. In other words, it is difficult to assemble the display only at the time of use, and to disassemble and store it when it is not in use, and it has no portability and storage property. Further, conventional display devices cannot be disassembled because they are fixed with screws or an adhesive or are formed by welding with a metal such as aluminum. Therefore, the conventional display with a motor is bulky when stored and transported in terms of size.

In view of the above-stated problems, an object of the present invention is to provide a modular rotating image display apparatus that can be readily assembled in use.

### [Solution to Problem]

A modular rotating image display apparatus in the present invention is a modular rotating image display apparatus having an image display sheet and configured to be assembled and disassembled, wherein the image display sheet is formed (configured) by a lens sheet on which a lens array is formed and a lens-corresponding image which corresponds to the lens sheet, the apparatus comprising: one or more holding unit(s) that hold(s) the image display sheet detachably in a cylinder-like fashion and thereby forms (configures) a barrel unit; a pair of closing units that detachably close openings at both ends of the barrel unit; a rotating shaft that removably extends through an inside of the barrel unit from one of the closing units to the other of the closing units; a support unit that imparts a rotational force to the rotating shaft and includes a driving unit configured to stand upright and to be tilted; and a bearing component that rotatably supports an end of the rotating shaft to enable rotation of a main body of the barrel unit, wherein, when the modular rotating image display apparatus is to be used, the barrel unit is formed (configured) by the image display sheet, the holding unit(s), the closing unit, and the rotating shaft; the bearing component is set up on the support unit so as to rotatably support the end of the rotating shaft made to extend through the barrel unit; and the driving unit is raised so that the other end of the rotating shaft is coupled thereto to impart the rotational force to the rotating shaft.

The image display sheet, the holding unit(s), the closing unit, the rotating shaft, and the bearing component may have a plate-like or bar-like shape.

The support unit may have a rectangular parallelepiped or cubic shape, and a thickness dimension of the thickest portions of the image display sheet, the holding unit(s), the closing unit, the rotating shaft, and the bearing component may be smaller than any of a width dimension, a height dimension, and a depth dimension of the support unit.

The support unit may have an accommodating section in an inside thereof, and the image display sheet, the holding unit(s), the closing unit, the rotating shaft, and the bearing component may be configured to be accommodated in the accommodating section.

It may be desired that the modular rotating image display apparatus further comprising a fitting section configured to be brought into fitting engagement with a center of each of the closing units, the fitting section making the rotating shaft extend through the barrel unit from the fitting section of one of the closing units to the fitting section of the other of the closing units in a state where the ends of the barrel unit are closed by the closing units, wherein, when the modular rotating image display apparatus is to be used, the image display sheet is held by the holding unit(s) in a cylinder-like fashion to form the barrel unit, the ends of the barrel unit are closed by the closing units, the fitting sections are brought into fitting engagement with the closing units along with the rotating shaft to make the rotating shaft extend through the barrel unit, the bearing component is set up on the support unit, and the driving unit is raised so that the rotating shaft is rotatably supported by the driving unit and the bearing component to enable rotation of the barrel unit.

The holding unit(s) may be configured to hold a plurality of the image display sheets in a rectangular cylinder-like fashion to thereby define the barrel unit.

The image display sheet may be flexible and configured to be removable and replaceable in a state where the modular rotating image display apparatus may be assembled.

### [Advantageous Effects of Invention]

According to the modular rotating image display apparatus of the present invention, since the individual components are configured to be removable, the apparatus only needs to be assembled when it should be used and the apparatus that has been assembled can be put to actual use. It can be disassembled and stored when it is not in use. Also, since lenticular-based moving images can be observed without observer's eyes being moved in a predetermined direction, the moving images can be readily observed. In particular, the device is more useful as a store advertisement.

### [Brief Description of Drawings]

Figure 1 is an external view illustrating an in-use state of a modular rotating image display apparatus of the present invention.
Figure 2 is an exploded view illustrating main components including a barrel unit 11 of the modular rotating image display apparatus 1.
Figure 3 is an explanatory diagram illustrating a state of the main components of modular rotating image display apparatus 1 that has been assembled.
Figure 4 is an explanatory diagram of a shape-retaining member 19.
Figure 5 is an external view of the shape-retaining member 19 that has been assembled.
Figure 6 is an explanatory diagram illustrating a state where a rotating shaft 15 is made to extend through the barrel unit 11.
Figure 7 is an explanatory diagram of a fitting section 14a.
Figure 8 is an enlarged view illustrating main components of the rotating shaft 15.
Figure 9 is an external explanatory diagram of a support unit 17.
Figure 10 is an external explanatory diagram where a driving unit 18 is raised.
Figure 11 is a schematic explanatory diagram illustrating a state where the driving unit 18 stands upright or is to be tilted.
Figure 12 is an explanatory diagram of a bearing component 16.
Figure 13 is an explanatory diagram of the bearing component 16.
Figure 14 is an explanatory diagram illustrating a state where a barrel unit 11 is attached to the support unit 17.
Figure 15 is an explanatory diagram illustrating the state of rotational support of the rotating shaft 15 by the bearing component 16.
Figure 16 is an explanatory diagram illustrating the state of rotational support of the rotating shaft 15 by the bearing component 16.
Figure 17 is an explanatory diagram of a drawer accommodating section 17d of the support unit 17.
Figure 18 is an explanatory diagram of the drawer accommodating section 17d of the support unit 17.
Figure 19 is an explanatory diagram illustrating another in-use state of the modular rotating image display apparatus.
Figure 20 is an explanatory diagram illustrating a state of the main components of the modular rotating image display apparatus that has been assembled according to another embodiment.

### [Description of Embodiments]

Embodiments of the present invention will be described with reference to the drawings. Meanwhile, the embodiments described hereinbelow are merely provided as examples and not intended to exclude various modifications and technical applications thereto that are not explicitly illustrated below. In other words, the present invention can be implemented with various modifications (through combination of the embodiments, etc.) made thereto as long as the effects of the present invention are exhibited.

Also, in the following description of the drawings, the same or similar parts are denoted by the same or similar reference signs. The drawings are of schematic nature and do not necessarily agree with actual dimensions, ratios, etc. The drawings may include portions which should have the same dimensions and ratios but are depicted as differing from each other in their relationships in terms of dimensions and ratios.

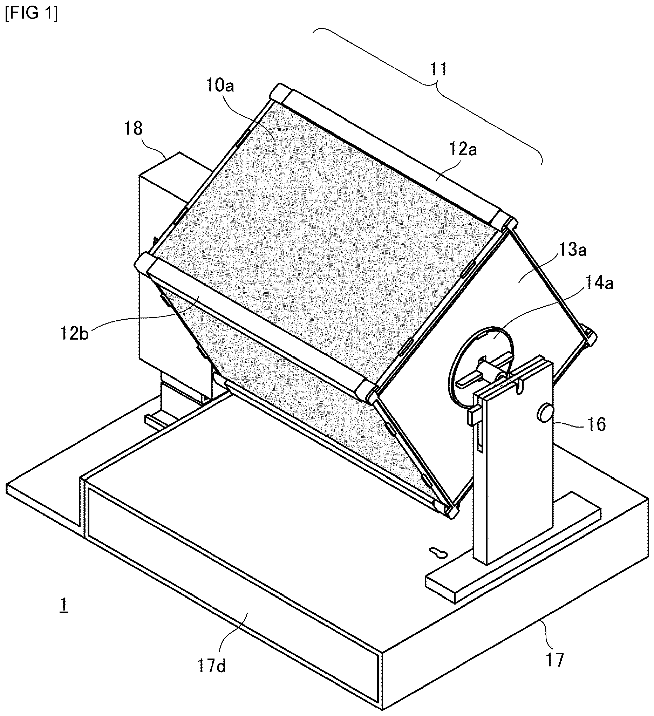

Figure 1 is an external view that illustrates an in-use state of a modular rotating image display apparatus of the present invention.

The modular rotating image display apparatus 1 includes image display sheets 10a, 10b, 10c, 10d each formed by a lens sheet on which a lens array is formed and a lens-corresponding image which corresponds to the lens sheet and the apparatus is configured to be assembled and disassembled.

The image display sheets 10a, 10b, 10c, 10d of this embodiment are each formed by a lenticular sheet (which is an example of the "lens sheet") on which a cylindrical lens array having a semi-circular shape is formed; and a lenticular image (which is an example of the "lens-corresponding image") that corresponds to the lenticular sheet and is arranged on a surface of the lenticular sheet opposite to the other surface thereof where the cylindrical lens is formed. Since the configuration of the image display sheet based on a lenticular sheet is traditionally known, description thereof is not provided here. In each figure, the images displayed on the image display sheets 10a, 10b, 10c, 10d are not depicted.

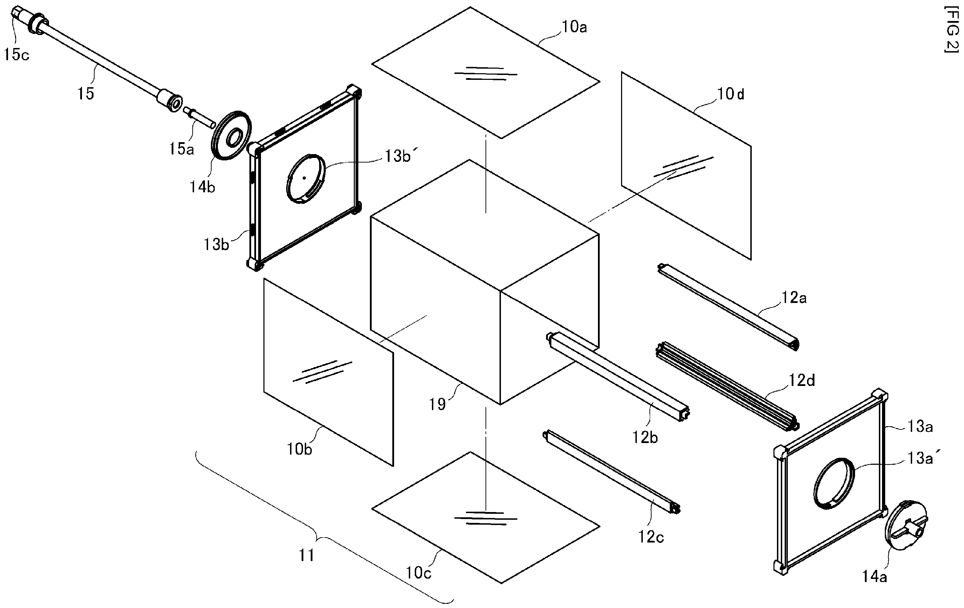

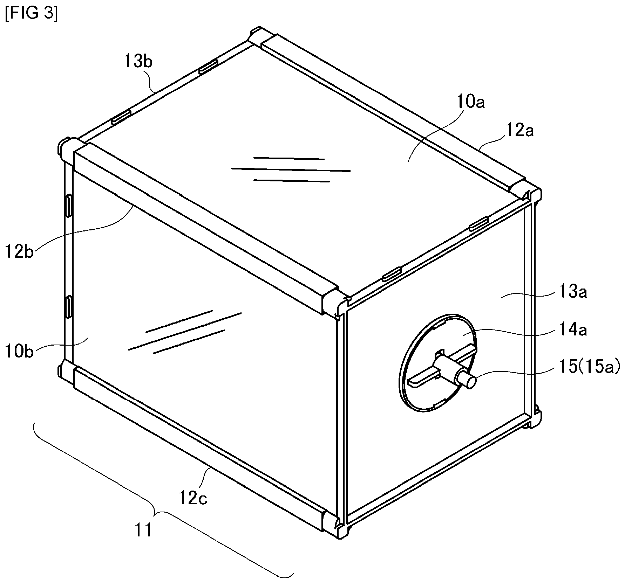

Figure 2 is an exploded view that illustrates main components including a barrel unit 11 of the modular rotating image display apparatus 1. Figure 3 is an explanatory diagram which illustrates the state where the main components of the modular rotating image display apparatus 1 have been assembled.

The modular rotating image display apparatus 1 according to this embodiment has holding components 12a, 12b, 12c, 12d (which correspond to the "holding units") that hold the image display sheets 10a, 10b, 10c, 10d detachably in a cylinder-like fashion (e.g., in a rectangular cylinder-like fashion) and form (or configure) a barrel unit 11; a pair of plate-like closing units 13a, 13b (e.g., with a shape of a square plate) that detachably close openings at both ends of the barrel unit 11; a rotating shaft 15 that removably extends through the barrel unit 11 from one closing unit 13b to the other closing unit 13a; a support unit 17 that imparts a rotational force to the rotating shaft 15 and includes a driving unit 18 configured to stand upright and to be tilted; and a bearing component 16 that rotationally supports one end of the rotating shaft 15 to enable rotation of the main body of the barrel unit 11.

In addition, when the modular rotating image display apparatus 1 is to be used, the barrel unit 11 is constituted by the image display sheets 10a, 10b, 10c, 10d, the holding components 12a, 12b, 12c, 12d, the closing units 13a, 13b, and the rotating shaft 15; the bearing component 16 is set up on the support unit 17 to rotationally support one end of the rotating shaft 15 extending through the barrel unit 11; and the driving unit 18 is raised to couple the other end of the rotating shaft 15 thereto and impart a rotational force to the rotating shaft 15.

When the barrel unit 11 is to be assembled, the image display sheets 10a, 10b, 10c, 10d are held in a rectangular cylinder-like fashion by the holding components 12a, 12b, 12c, 12d (which correspond to the holding units) to form the barrel unit 11. Specifically, in order to be put to actual use, the image display sheets 10a, 10b, 10c, 10d are held with their respective sides coupled to each other to constitute the barrel unit 11. When the barrel unit 11 is to be disassembled, the image display sheets 10a, 10b, 10c, 10d can be readily disassembled and removed. It should be noted that, in this embodiment, the barrel unit 11 is reinforced using a foldable shape-retaining member 19.

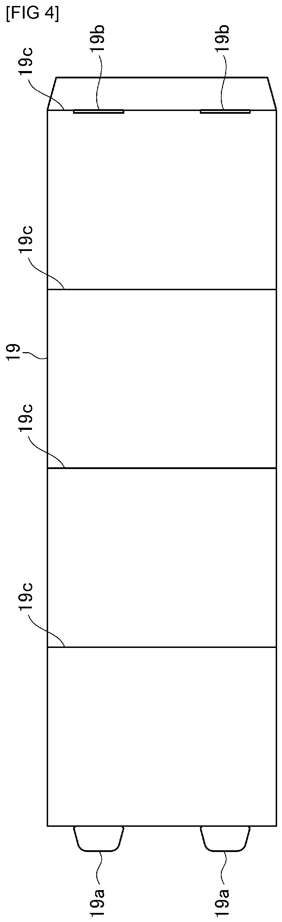

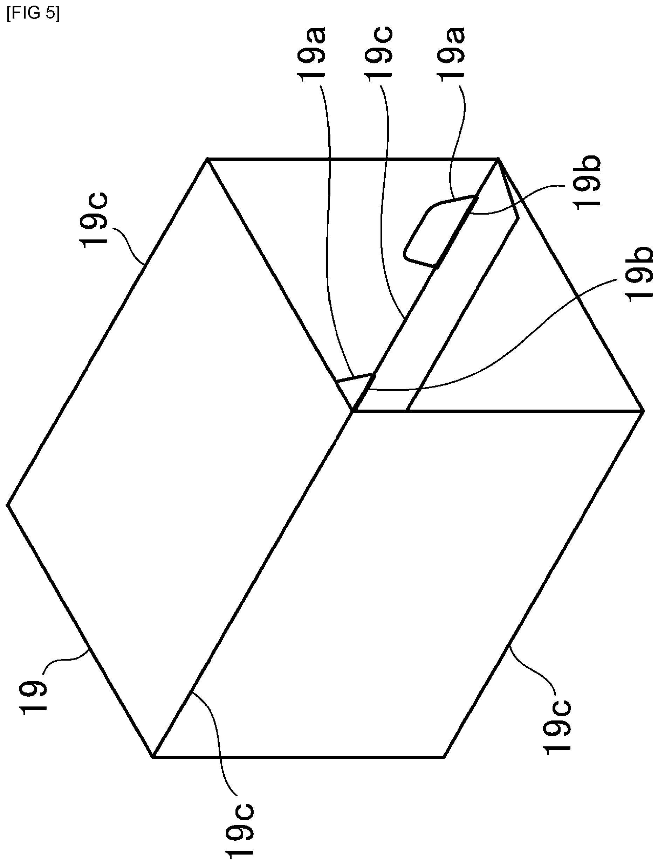

Figures 4 and 5 are explanatory diagrams of the shape-retaining member 19.
The shape-retaining member 19 has a nail section 19a and a groove section 19b. Figure 5 is an external view of the shape-retaining member 19 that has been assembled and, as illustrated in the same figure, when in use, it is folded along the folding line 19c, the nail section 19a is forcibly inserted into the groove section 19b to be brought into locking engagement therewith and thereby the rectangular cylindrical shape is created. When not in use, it is folded along the folding lines 19c and can be stored in a compact plate-like shape. It should be noted that, when the barrel unit 11 is rotated, if the barrel unit 11 is allowed to have a desired strength and a desired shape can be maintained only by the image display sheets 10a, 10b, 10c, 10d and the holding components 12a, 12b, 12c, 12d, then the shape-retaining member 19 does not need to be provided.

The closing units 13a, 13b are a pair of plate-like members. When the barrel unit 11 is to be assembled, the openings at both ends of the barrel unit 11 are closed. When the barrel unit 11 is to be disassembled, the closing units 13a, 13b can be readily disassembled and removed.

The rotating shaft 15 serves as the rotating shaft of the barrel unit 11. When the barrel unit 11 is to be assembled, the rotating shaft 15 is made to extend through the barrel unit 11 from one closing unit 13b to the other closing unit 13a of the barrel unit 11. The fitting section 14a is brought into fitting engagement with the center of the closing unit 13a and the section 14b is brought into fitting engagement with the center of the closing unit 13b to make the rotating shaft 15 extend there through.

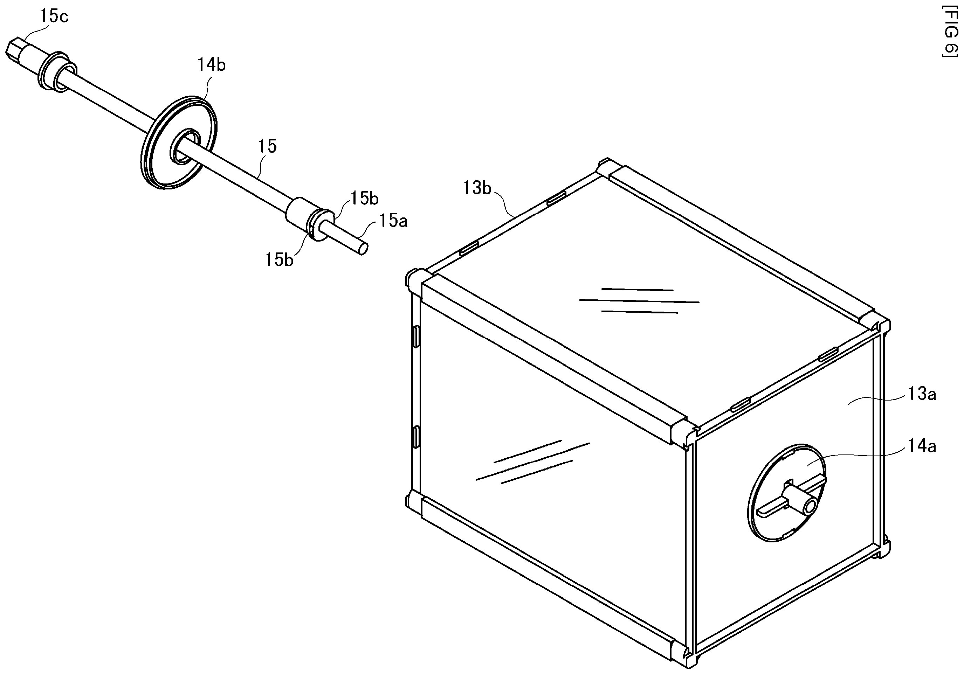

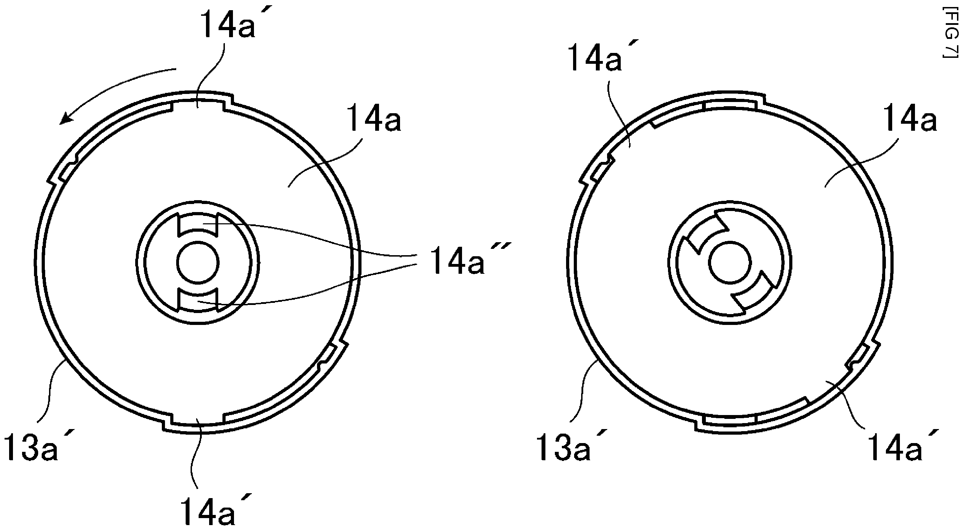

Figure 6 is an explanatory diagram that illustrates the state where the rotating shaft 15 is made to extend through the barrel unit 11. Figure 7 is an explanatory diagram of the fitting section 14a and is an enlarged view illustrating main components, where how the fitting section 14a is brought into fitting engagement with the closing unit 13a observed from within the barrel unit 11.

In a state where the both ends of the barrel unit 11 are closed by the closing units 13a, 13b, the rotating shaft 15 is made to extend through the barrel unit 11 from the fitting section 14b of the one closing unit 13b to the fitting section 14a of the other closing unit 13a so as to couple the rotating shaft 15 to the barrel unit 11.

The diagram on the left side of Figure 7 depicts the state prior to the fitting engagement and the diagram on the right side depicts the state after the fitting engagement. The fitting section 14a is brought into fitting engagement with the to-be-fitted section 13a' of the closing unit 13a (the left side in Figure 7). In addition, the fitting section 14a is rotated in the direction indicated by the arrow in Figure 7 and the to-be-fitted section 13a' is made to be caught on and brought into fitting engagement with the fitting nail 14a' of the fitting section 14a (the right side in Figure 7 and Figure 6).

On the other hand, on the side of the closing unit 13b, in a state where the rotating shaft 15 is passed through the center of the fitting section 14b (Figure 6), the fitting section 14b is brought into fitting engagement with the to-be-fitted section 13b' of the closing unit 13b (Figure 2). The procedure to establish the fitting engagement between the closing unit 13b and the fitting section 14b may proceed in the same manner as the procedure to bring the fitting section 14a into engagement with the closing unit 13a.

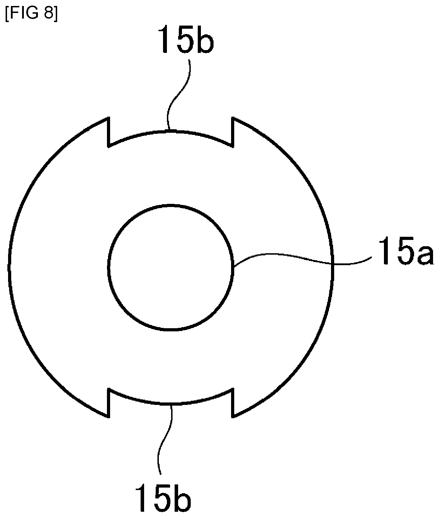

Figure 8 is an enlarged view illustrating main components of the rotating shaft 15.

The rotating shaft 15 of this embodiment has an extended section 15a formed by extending one end of the rotating shaft 15. Figure 8 is a diagram in which the rotating shaft 15 is viewed in the axial direction from the side of the extended section 15a.

The rotating shaft 15 is fixed to the fitting section 14a. Specifically, as illustrated in Figures 6 to 8, the rotating shaft 15 is fixed to the fitting section 14a by the to-be-fitted section 15b of the rotating shaft 15 being brought into fitting engagement with the fitting nail 14a" of the fitting section 14a.

In addition, as illustrated in Figure 3, both ends of the rotating shaft 15 protrude from the barrel unit 11 and one protruding end thereof is rotatably supported by the bearing component 16 and the other end receives the rotational force from the driving unit 18. By virtue of the fact that the rotating shaft 15 is fixed to the fitting section 14a, the rotational force received by the rotating shaft 15 is allowed to be imparted to the entire barrel unit 11, which enables rotation of the barrel unit 11.

When the barrel unit 11 is to be disassembled, the individual components including the rotating shaft 15, the fitting sections 14a, 14b, and the like can be readily disassembled and removed.

It should be noted that the rotating shaft 15 and the fitting section 14a are fixed to each other in this embodiment, but it suffices that the rotating shaft 15 be fixed to any component constituting the barrel unit 11. Also, one end of the rotating shaft 15 is extended and the extended section 15a obtained by this extension protrudes from the barrel unit 11 to be rotatably supported by the bearing component 16, but the extended section 15a may be formed integrally with the rotating shaft 15.

As has been discussed in the foregoing, the barrel unit 11 is constituted by the image display sheets 10a, 10b, 10c, 10d and the other components.

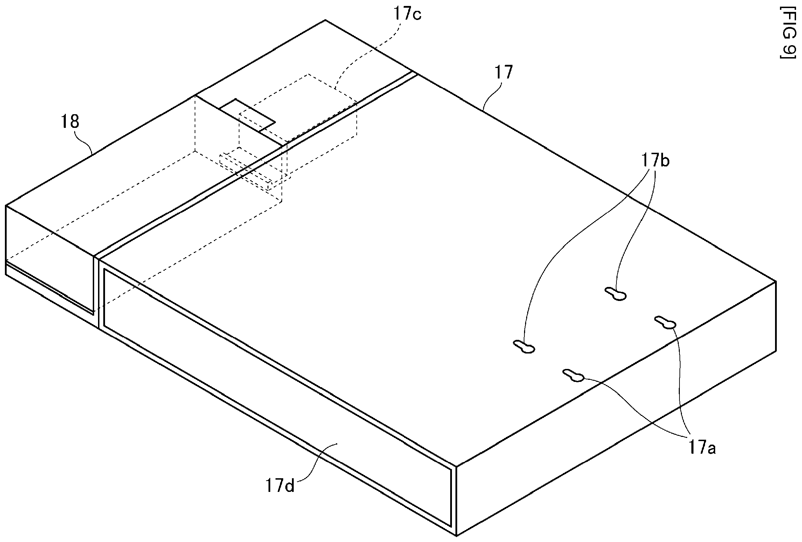

Figure 9 is an external explanatory diagram of the support unit 17. This figure depicts the support unit 17 which is yet to be assembled.

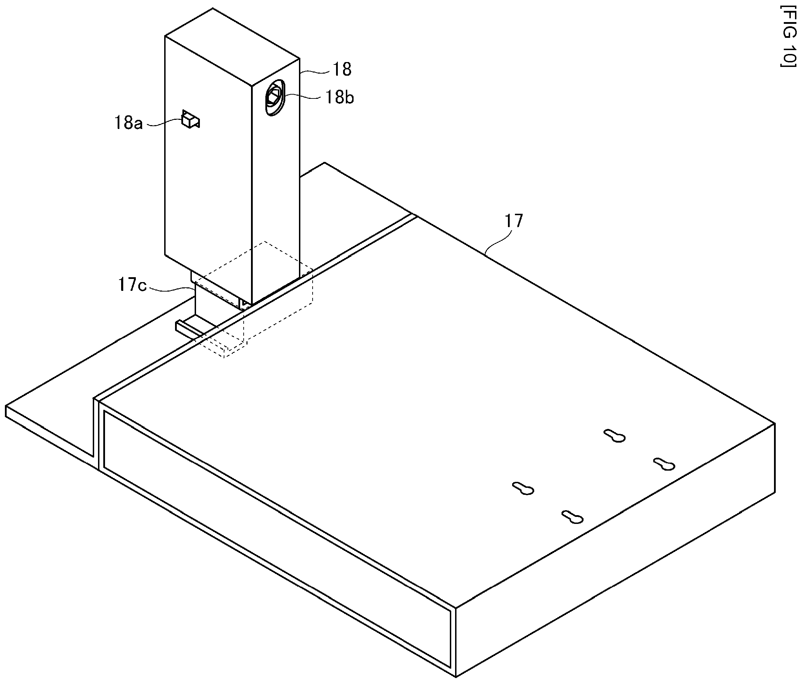

The support unit 17 includes a driving unit 18 that imparts a rotational force to the rotating shaft 15. The driving unit 18 is configured to stand upright and to be tilted. Figure 10 is an external explanatory diagram where the driving unit 18 is raised. A switch 18a that can be externally operated as appropriate, for example, for turning on and off of the motor and switching of torques is mounted on the front side at the time of the driving unit 18 standing upright, i.e., the front side of the driving unit 18 when the modular rotating image display apparatus 1 is to be assembled and put to actual use.

The driving unit 18 incorporates a drive device, which accommodates a gear motor, and a removable dry battery or rechargeable battery. In addition, operation of the driving unit 18 can be changed between "OFF," "(Low-Speed) ON," and "(high-speed) ON" by means of the switch 18a. For the purpose of observing the image change due to the lenticular, the rotation speed may be slow and, for example, at a low speed, it may take several seconds to several tens of seconds for one rotation. Even at a high speed, it may take only a few seconds for one rotation.

In one possible configuration, a counter may be provided in the driving unit 18 so that the number of rotations can be freely specified and, in an alternative configuration, a timer may be provided therein so that the driving unit 18 automatically stops and starts rotation. In another configuration, the direction of rotation may be changed. Also, in yet another configuration, the rotation speed may be changed in a stepwise manner by a variable resistor. Also, the voltage may be controlled by a PWM (pulse width modulation) signal to control the rotation speed. In still another configuration, the rotation speed may be automatically increased and decreased.

When the modular rotating image display apparatus 1 is to be used, the driving unit 18 is raised and the end 15c of the rotating shaft 15 is coupled to the coupling section 18b of the driving unit 18.

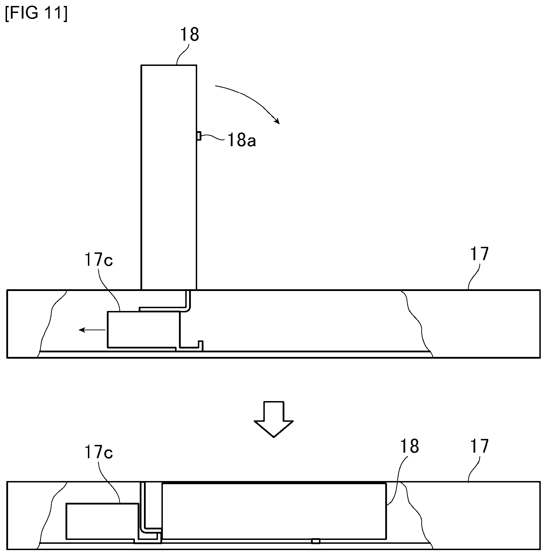

Figure 11 is a schematic explanatory diagram which illustrates the state where the driving unit 18 stands upright or is to be tilted.

The support unit 17 includes a support section 17c that supports the driving unit 18. As illustrated in the upper portion of the Figure 11, when the modular rotating image display apparatus 1 is to be used, the driving unit 18 is raised, the support section 17c accommodated in the support unit 17 is made to be slid and pulled out, and the driving unit 18 that has been raised is supported by the support section 17c.

In addition, when the modular rotating image display apparatus 1 is to be stored, as illustrated in the lower diagram in Figure 11, the support section 17c is slid and stored in the support unit 17 and the driving unit 18 is made to lie down. In the manner described above, the driving unit 18 is configured to readily stand upright and to be tilted. In particular, by virtue of the support section 17c, the driving unit 18 can be stably supported without rattling both at the time of standing upright and at the time of lying down.

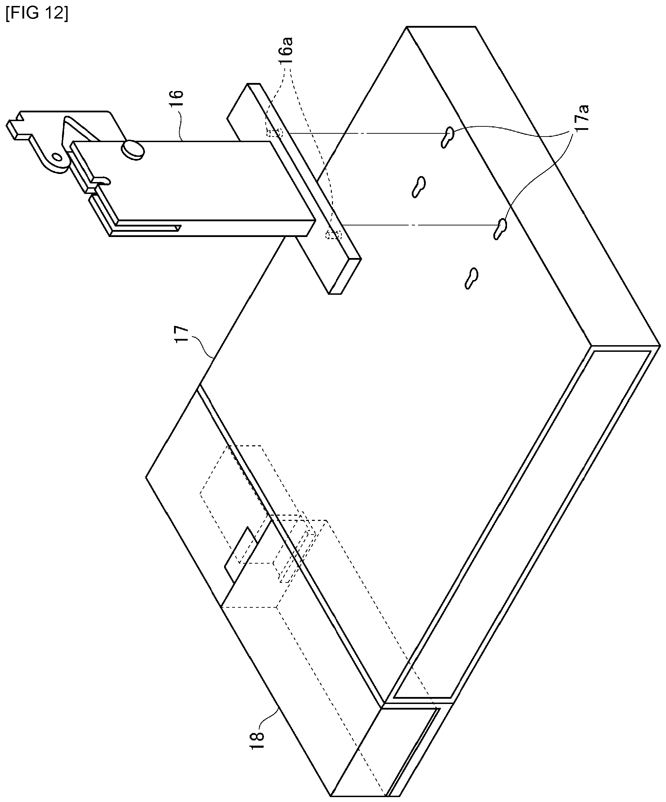

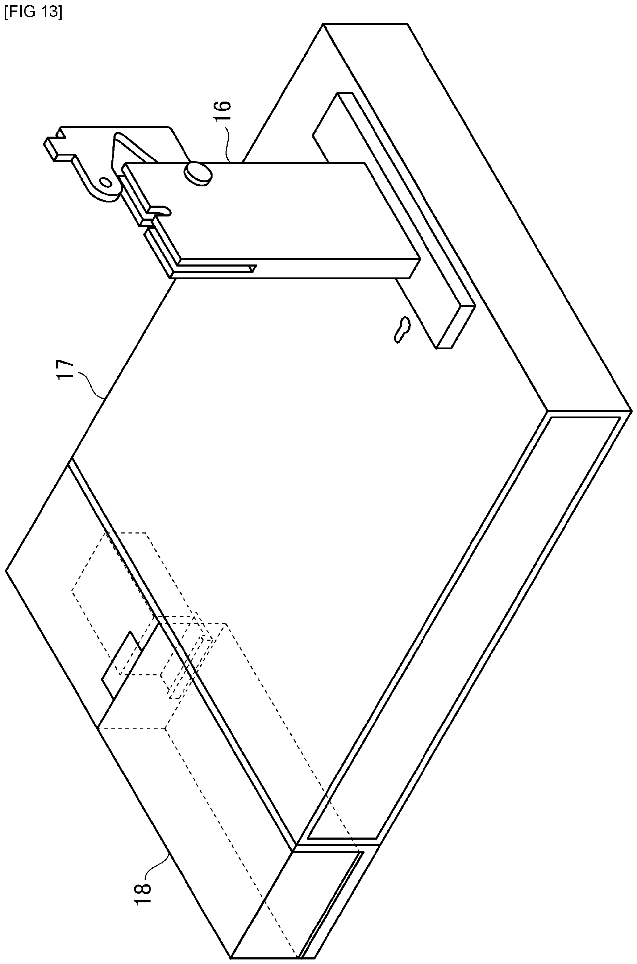

Figures 12 and 13 are explanatory diagrams of a bearing component 16.

The support unit 17 has holes 17a, 17b which is a locking section that brings the bearing component 16 into detachable locking engagement therewith. The bearing component 16 includes an insertion section 16a which is illustrated at a lower portion of the figure. The bearing component 16 is set up on the support unit 17 by inserting and bringing the insertion section 16a into the hole 17a or 17b provided in the support unit 17 to place it in the locking engagement with the support unit 17.

In the example illustrated in Figures 12 and 13, the insertion section 16a of the bearing component 16 is attached to the holes 17a. If the size of the barrel unit 11 differs, the insertion section 16a may be inserted into the holes 17b provided at a location different than the holes 17a to be brought into locking engagement therewith. In other words, the hole can be provided at a desired location on the support unit 17 in accordance with the size of the barrel unit 11. By virtue of this, it is made possible to accommodate various sizes of the barrel unit 11. In other words, it is made possible to accommodate various sizes of the image display sheet.

When the modular rotating image display apparatus 1 is to be stored, the insertion section 16a of the bearing component 16 should be removed from the holes 17a or 17b.

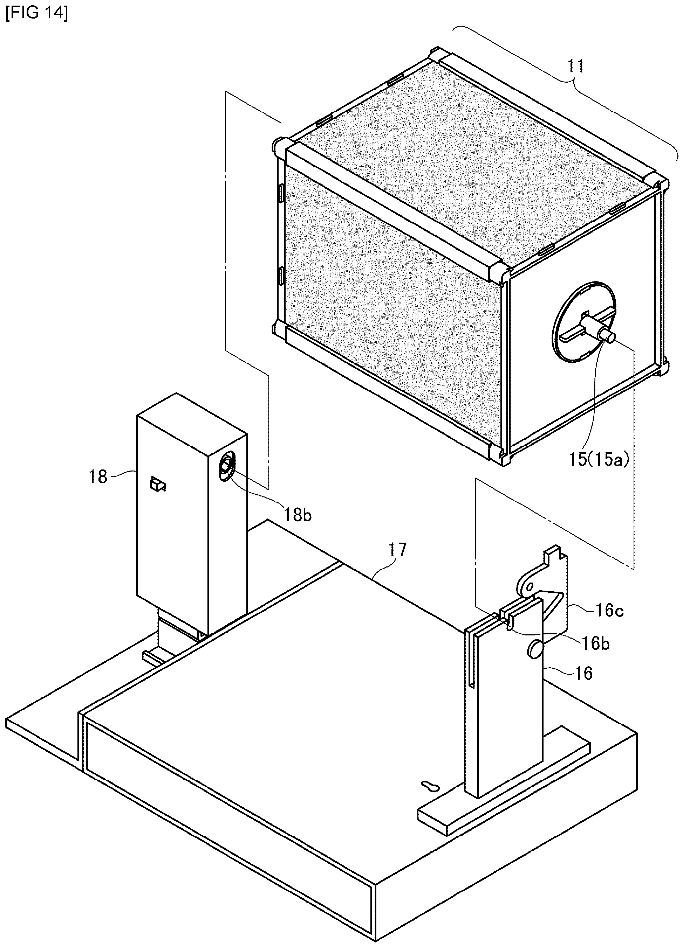

Figure 14 is an explanatory diagram that illustrates a state where a barrel unit 11 is attached to a support unit 17.

First, the bearing component 16 is set up on the support unit 17 and the driving unit 18 is raised. In addition, the rotating shaft 15 is rotatably supported by the driving unit 18 and the bearing component 16 to enable rotation of the barrel unit 11.

The end 15c of the rotating shaft 15 has a cross section formed in the shape of a polygon (Figure 6, etc.) and is coupled to the coupling section 18b of the driving unit 18 (Figure 14, etc.) which is likewise formed with a polygonal shape.

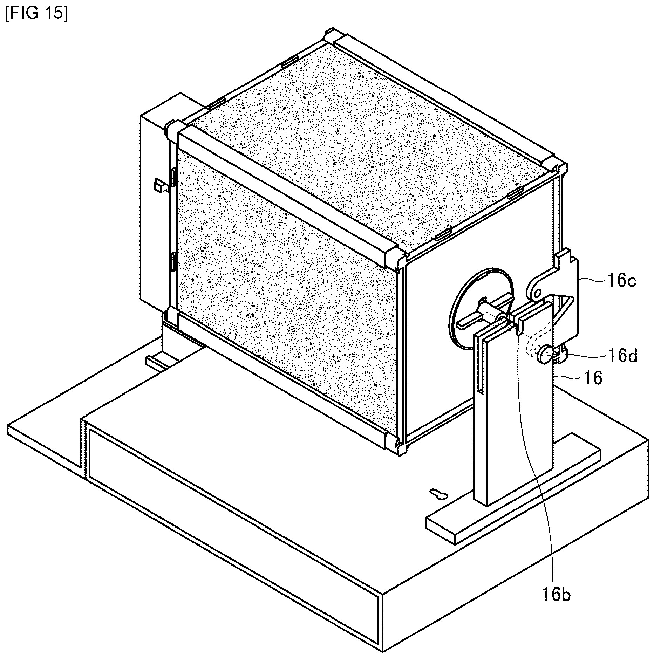

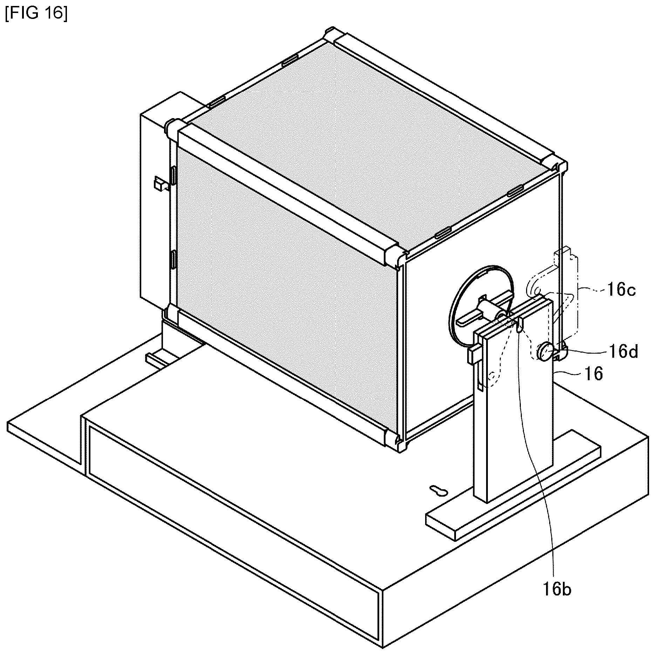

Figures 15 and 16 are explanatory diagrams that illustrate the state of rotational support of the rotating shaft 15 by the bearing component 16. One end of the rotating shaft 15 is placed on the bearing section 16b of the bearing component 16 (Figure 15). Next, a holding piece 16c provided on the bearing component 16 is rotated about the pin 16d and the rotating shaft 15 placed on the bearing section 16b is pressed from the upper portion in the figure (Figure 16). In this manner, the rotating shaft 15 can be supported without displacement by the bearing section 16b by means of the weight of the holding piece 16c so that the barrel unit 11 is rotatable about the rotating shaft 15.

In addition, when the power source of the driving unit 18 is turned on, the coupling section 18b is rotated and its rotational force is imparted to the rotating shaft 15 and the barrel unit 11 is rotated.

When the modular rotating image display apparatus 1 is to be stored, the holding piece 16c is rotated and the end of the rotating shaft 15 is opened. In this embodiment, the extended section 15a of the rotating shaft 15 is opened. Also, the end 15c of the rotating shaft 15 is pulled out of the coupling section 18b to remove the barrel unit 11.

According to the modular rotating image display apparatus 1 in accordance with this embodiment, it is made possible to achieve the modular rotating image display apparatus 1 that can be readily assembled in use. In particular, in this embodiment, the example has been described in which multiple (e.g., n pieces of) the image display sheets 10a, 10b, 10c, 10d (where n = 4) are retained in a rectangular cylinder-like shape to form the barrel unit 11. For example, one face of the image display sheet (e.g., the image display sheet 10a), a continuous image change can be observed by a lenticular image formed based on multiple (e.g., m pieces of) successive images and a lenticular lens.

Further, if one image on one face is followed by another image on another face (e.g., the image display sheet 10b), four-sided continuous image can be provided. In this manner, three faces (e.g., the image display sheet 10c) or four faces (e.g., the image display sheet 10d) continue in this manner by the multiple image display sheets, then the continuous images add up to a considerable number (e.g., (n × m) images, and (4 × m) images in this embodiment) and it is also made possible to enjoy one story.

In particular, since the change in the image can be rotated at a constant speed by the driving unit 18 without depending on the "movement of the eyes of the viewer himself-herself," the continuous images can be viewed by the observer at a desired speed.

Further, since the images can be continuously rotated in the same direction by the driving unit 18, continuous images can be viewed without the images going back in the reverse direction.

Also, it is preferable that the individual components constituting the barrel unit 11 have a plate-like or bar-like shape. Specifically, the image display sheets 10a, 10b, 10c, 10d; the holding components 12a, 12b, 12c, 12d; the closing units 13a, 13b; the rotating shaft 15; the bearing component 16; and the like are preferably formed in a plate-like or bar-like shape. By virtue of this, it can be stored with a compact size when it is stored.

Further, it is preferable that the support unit 17 defines a rectangular parallelepiped or cubic shape. The support unit 17 functions as a seat for the modular rotating image display apparatus 1. For example, as illustrated in the figures, if the support unit 17 is configured to have the same size as an industrial standard paper size such as B5 size, the support unit 17 can be stood and stored in a bookshelf, a storage rack, etc. when not in use, which makes it easier to handle it.

Further, if the support unit 17 has a thick rectangular parallelepiped or cubic shape, the inside thereof becomes hollow and the accommodation space will be created. The individual components constituting the barrel unit 11 can be stored in this accommodation space. Specifically, the thickness dimension of the thickest portion of the image display sheets 10a, 10b, 10c, 10d, the holding components 12a, 12b, 12c, 12d, the closing units 13a, 13b, the rotating shaft 15, and the bearing component 16 is defined as a dimension smaller than any of the width dimension, the height dimension, and the depth dimension of the support unit 17.

By virtue of this, the individual components are allowed to be stored in the accommodation space created inside the support unit 17.

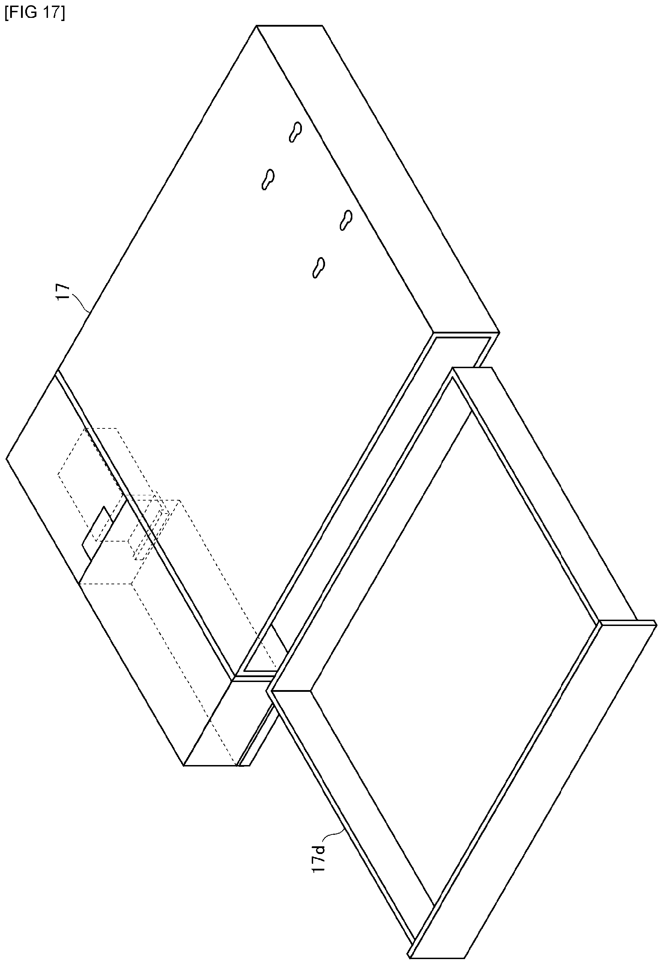

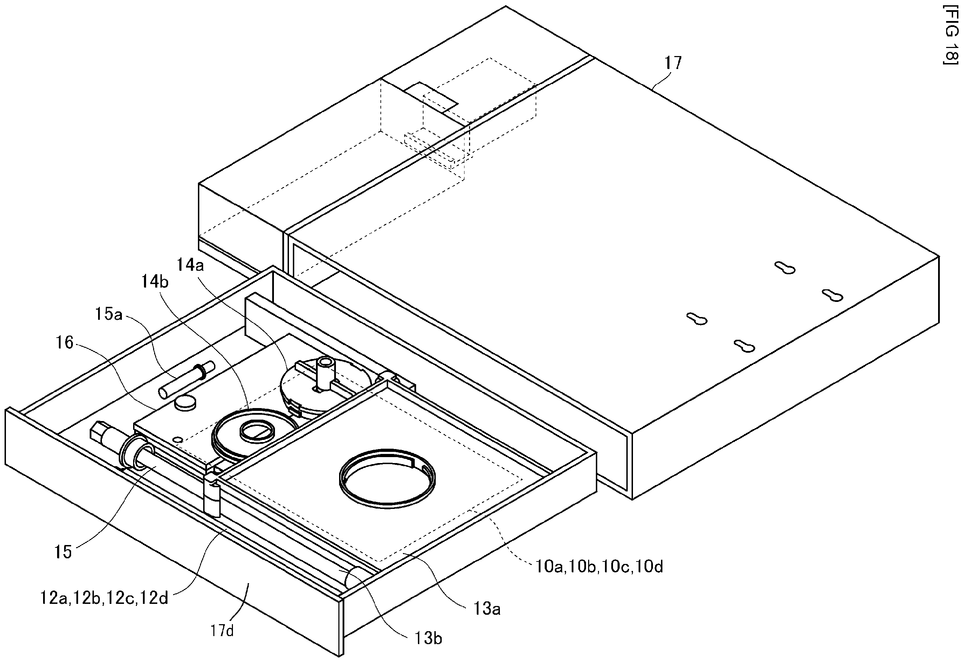

Further, a drawer-type accommodating section may be formed so that the individual components can be readily stored in the accommodation space in the support unit 17. Figures 17 and 18 are explanatory diagrams of a drawer accommodating section 17d of the support unit 17.

The drawer accommodating section 17d is an example of the "accommodating section" of the present invention, and is configured to be slidably inserted into the accommodation space of the support unit 17. In addition, when the image display sheets 10a, 10b, 10c, 10d, the holding components 12a, 12b, 12c, 12d, the closing units 13a, 13b, the rotating shaft 15, the bearing component 16, etc. are stored in the drawer accommodating section 17d, the modular rotating image display apparatus 1 can be stored in a fully professionally compact manner. Specifically, it is made possible to store the modular rotating image display apparatus 1 in a compact manner in accordance with the size of the support unit 17.

Further, the image display sheets 10a, 10b, 10c, 10d according to this embodiment are formed by forming the lenticular image on a flexible image forming medium such as paper or film and placing it on the lenticular sheet. Alternatively, they are configured with the image being formed on a surface of the lenticular sheet opposite to the surface on which the cylindrical lens is arranged. Since the image display sheets 10a, 10b, 10c, 10d are flexible, the image display sheets 10a, 10b, 10c, 10d can be made removable and replaceable in a state where the modular rotating image display apparatus 1 is assembled (Figure 1).

When the image display sheets 10a, 10b, 10c, 10d are to be replaced, the image display sheet to be replaced is bent to remove it from the holding components 12a, 12b, 12c, 12d, the other image display sheets 10a, 10b, 10c, 10d are bent in the same or similar manner so as to be brought into fitting engagement with the holding components 12a, 12b, 12c, 12d. In particular, when the holding components 12a, 12b, 12c, 12d are assembled so as to be coupled to the closing units 13a and 13b, then the image display sheet can be more stably replaced in a state where the modular rotating image display apparatus 1 remains in an assembled state.

In this manner, it will be made possible to readily replace an image display sheet by preparing sets of various types of image display sheets. When the replacement of the image display sheets is facilitated, it will be made possible to relatively readily sell and distribute sets of various types of image display sheets.

Although the example has been described where multiple image display sheets are retained in a rectangular cylindrical fashion to form the barrel unit 11 in this embodiment, sides of a single or multiple image display sheets may be retained together in a cylindrical fashion to form the barrel unit 11.

As has been described in the foregoing, according to the modular rotating image display apparatus 1, since the individual components are configured to be removable, it can be assembled to be put to actual use only when it needs to be assembled at all. When it is not used, it can be disassembled and stored.

Also, since a lenticular-based moving image can be observed even when the observer does not move his/her eyes in a predetermined direction, the moving image can be readily observed. In particular, it is more useful as a store advertisement. Since not only does the screen move but also the main body of the barrel unit 11 of the modular rotating image display apparatus 1 rotates, it can attract more people's attention.

Further, while the individual components can be made of any material such as wood, metal, and plastic, they can be manufactured at a relatively low cost by using, in particular, MDF or other wood materials or plastic composites.

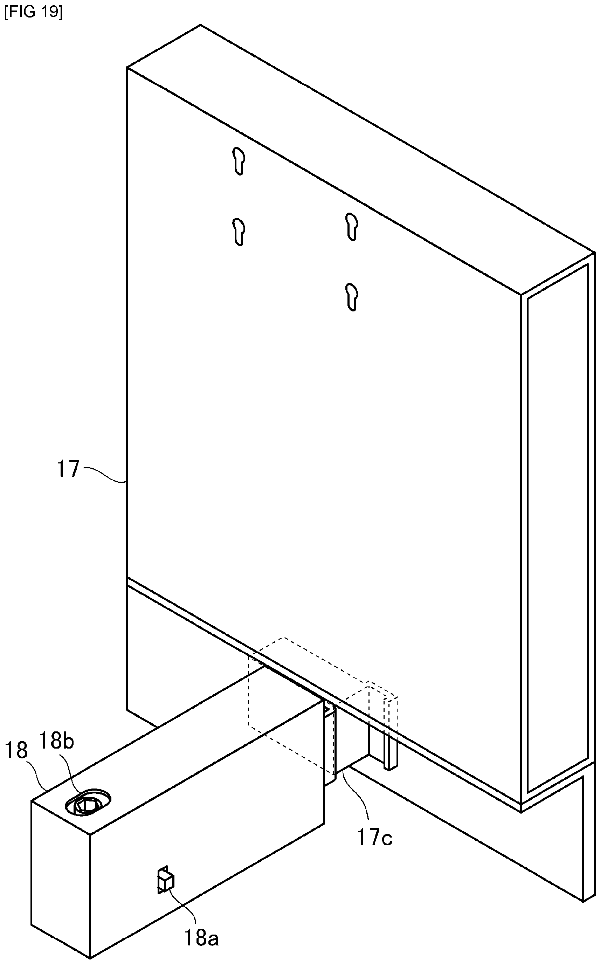

Figure 19 is an explanatory diagram that illustrates another in-use state of the modular rotating image display apparatus 1. It should be noted that, in the same figure, the barrel unit 11, the bearing component 16, etc. are not shown. As illustrated in the same figure, it is also possible to use the rotating shaft 15 that is made to extend perpendicular to the ground, i.e., the modular rotating image display apparatus 1 can be used in a state where the modular rotating image display apparatus 1 stands upright. In the example of the same figures, the driving unit 18 is used as a support for making the modular rotating image display apparatus 1 stand upright.

Whereas the barrel unit 11 rotates in a certain manner on the support unit 17 from top to bottom (or from bottom to top) in the above-described embodiment, the barrel unit 11 in the example illustrated in Figure 19 can be configured to be rotated in a certain manner from right to left (or from left to right). Various image changes can be enjoyed with increased usefulness.

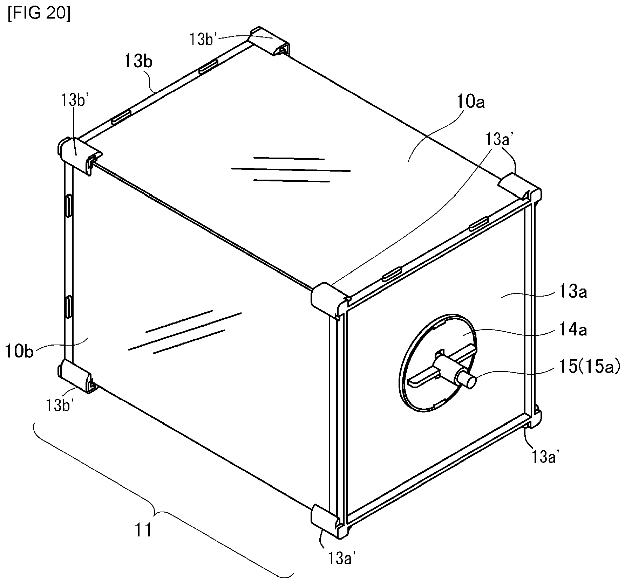

Figure 20 is an explanatory diagram that illustrates the state of the main components of the modular rotating image display apparatus after they have been assembled according to another embodiment.

Whereas the barrel unit 11 is formed by the holding components 12a, 12b, 12c, 12d in the above-described embodiment, this is an example where the role of the holding components 12a, 12b, 12c, 12d to detachably retain the image display sheets 10a, 10b, 10c, 10d in a cylinder-like fashion is arranged integrally with the closing units 13a, 13b.

The closing unit 13a includes a holding unit 13a' for holding the image display sheets 10a, 10b, 10c, 10d and, likewise, the closing unit 13b includes a holding unit 13b' for holding the image display sheets 12a, 12b, 12c, 12d.

When the lengths of the holding units 13a', 13b' becomes longer, then the retention force of the image display sheets 10a, 10b, 10c, 10d becomes higher. Meanwhile, when they are too long, they cannot be stored in an internal accommodation space inside such as the drawer accommodating section 17d of the support unit 17. Hence, it is preferable that the holding units 13a', 13b' are provided in the closing units 13a, 13b within the range where they can be stored in the internal accommodation space and with the longest possible size. The thickness dimension of the thickest portion of the closing unit 13a is preferably smaller than any of the width dimension, the height dimension, and the depth dimension of the support unit 17.

The range of application of the present invention is not limited to the above-described embodiments. The present invention can be widely applied to modular rotating image display apparatuses that have an image display sheet formed by a lens sheet on which a lens array is formed and a lens-corresponding image corresponding to the lens sheet, and are configured to be assembled and disassembled.

### [Reference Signs List]

1: modular image display apparatus
10a, 10b, 10c, 10d: image sheet
11: barrel unit
12a, 12b, 12c, 12d: holding component (holding unit)
13a, 13b: closing unit
13a', 13b': holding unit
14a, 14b: fitting section
15: rotating shaft
16: bearing component
17: support unit
17d: accommodating section
18: driving unit

## Claims

1. A modular rotating image display apparatus (1) having an image display sheet (10a, 10b, 10c, 10d) and configured to be assembled and disassembled, wherein the image display sheet is formed by a lens sheet on which a lens array is formed and a lens-corresponding image which corresponds to the lens sheet, the apparatus comprising:
one or more holding unit(s) (12a, 12b, 12c, 12d) that hold(s) the image display sheet (10a, 10b, 10c, 10d) detachably in a cylinder-like fashion and thereby form(s) a barrel unit (11);
a pair of closing units (13a, 13b) that detachably close openings at both ends of the barrel unit (11);
a rotating shaft (15) that removably extends through an inside of the barrel unit from one of the closing units to the other of the closing units;
a support unit that imparts (17) a rotational force to the rotating shaft (15) and includes a driving unit (18) configured to stand upright and to be tilted relative to the support unit; and
a bearing component (16) that rotatably supports an end of the rotating shaft to enable rotation of a main body of the barrel unit, wherein,
when the modular rotating image display apparatus (1) is to be used,
the barrel unit (11) is formed by the image display sheet (10a, 10b, 10c, 10d), the holding unit(s) (12a, 12b, 12c, 12d), the closing unit (13a, 13b), and the rotating shaft (15);
the bearing component (16) is set up on the support unit (17) so as to rotatably support the end of the rotating shaft made to extend through the barrel unit; and
the driving unit (18) is raised so that the other end of the rotating shaft is coupled thereto to impart the rotational force to the rotating shaft.

2. The modular rotating image display apparatus according to claim 1, wherein the image display sheet (10a, 10b, 10c, 10d), the holding unit(s) (12a, 12b, 12c, 12d), the closing unit (13a, 13b), the rotating shaft (15), and the bearing component (16) have a plate-like or bar-like shape.

3. The modular rotating image display apparatus according to claim 1 or 2, wherein the support unit (17) has a rectangular parallelepiped or cubic shape, and
a thickness dimension of the thickest portions of the image display sheet (10a, 10b, 10c, 10d), the holding unit(s) (12a, 12b, 12c, 12d), the closing unit (13a, 13b), the rotating shaft (15), and the bearing component (16) is smaller than any of a width dimension, a height dimension, and a depth dimension of the support unit (17).

4. The modular rotating image display apparatus according to any one of claims 1 to 3, wherein the support unit (17) has an accommodating section (17d) in an inside thereof, and
the image display sheet (10a, 10b, 10c, 10d), the holding unit(s) (12a, 12b, 12c, 12d), the closing unit (13a, 13b), the rotating shaft (15), and the bearing component (16) are configured to be accommodated in the accommodating section (17d).

5. The modular rotating image display apparatus according to any one of claims 1 to 4, further comprising fitting sections (14a, 14b) configured to be brought into fitting engagement with a center of each of the closing units (13a, 13b), the fitting sections (14a, 14b) making the rotating shaft (15) extend through the barrel unit (11) from the fitting section of one of the closing units to the fitting section of the other of the closing units in a state where the ends of the barrel unit are closed by the closing units, wherein,
when the modular rotating image display apparatus is to be used,
the image display sheet (10a, 10b, 10c, 10d) is held by the holding unit(s) (12a, 12b, 12c, 12d) in a cylinder-like fashion to form the barrel unit (11),
the ends of the barrel unit are closed by the closing units (13a,13b),
the fitting sections (14a, 14b) are brought into fitting engagement with the closing units (13a, 13b) along with the rotating shaft (15) to make the rotating shaft extend through the barrel unit (11),
the bearing component (16) is set up on the support unit (17), and
the driving unit (18) is raised so that the rotating shaft is rotatably supported by the driving unit and the bearing component (16) to enable rotation of the barrel unit.

6. The modular rotating image display apparatus according to any one of claims 1 to 5, wherein the holding unit(s) (12a, 12b, 12c, 12d) is/are configured to hold a plurality of the image display sheets (10a, 10b, 10c, 10d) in a rectangular cylinder-like fashion to thereby define the barrel unit (11).

7. The modular rotating image display apparatus according to any one of claims 1 to 6, wherein the image display sheet (10a, 10b, 10c, 10d) is flexible and configured to be removable and replaceable in a state where the modular rotating image display apparatus is assembled.

## Patentansprüche

1. Modulare drehbare Bildanzeigevorrichtung (1), die eine Bildanzeigescheibe (10a, 10b, 10c, 10d) aufweist und dazu ausgestaltet ist, zusammengebaut und auseinandergebaut zu werden, wobei die Bildanzeigescheibe durch eine Linsenscheibe, auf welcher eine Linsenanordnung gebildet ist, und ein der Linse entsprechendes Bild gebildet wird, das der Linsenscheibe entspricht, wobei die Vorrichtung umfasst:
eine oder mehrere Halteeinheit(en) (12a, 12b, 12c, 12d), welche die Bildanzeigescheibe (10a, 10b, 10c, 10d) abnehmbar in einer zylinderartigen Weise hält /halten und dadurch eine Trommeleinheit (11) bildet/bilden,
ein Paar von Schließeinheiten (13a, 13b), die Öffnungen an beiden Enden der Trommeleinheit (11) abnehmbar verschließen,
eine drehbare Welle (15), die sich auf herausnehmbare Weise durch ein Inneres der Trommeleinheit hindurch von einer der Schließeinheiten bis zu der anderen der Schließeinheiten erstreckt,
eine Trägereinheit (17), die der drehbaren Welle (15) eine Drehkraft verleiht und die eine Antriebseinheit (18) beinhaltet, die dazu ausgestaltet ist, aufrecht zu stehen und relativ zu der Trägereinheit gekippt zu werden, und
eine Lagerkomponente (16), die ein Ende der drehbaren Welle drehbar trägt, um die Rotation eines Hauptkörpers der Trommeleinheit zu ermöglichen, wobei,
wenn die modulare drehbare Bildanzeigevorrichtung (1) verwendet werden soll,
die Trommeleinheit (11) durch die Bildanzeigescheibe (10a, 10b, 10c, 10d), die Halteeinheit(en) (12a, 12b, 12c, 12d), die Schließeinheit (13a,13b) und die drehbare Welle (15) gebildet wird,
die Lagerkomponente (16) an der Trägereinheit (17) so eingerichtet wird, dass sie das Ende der drehbaren Welle, die zur Erstreckung durch die Trommeleinheit veranlasst wurde, drehbar trägt, und
die Antriebseinheit (18) angehoben wird, so dass das andere Ende der drehbaren Welle damit gekoppelt wird, um der drehbaren Welle die Drehkraft zu verleihen.

2. Modulare drehbare Bildanzeigevorrichtung nach Anspruch 1, wobei die Bildanzeigescheibe (10a, 10b, 10c, 10d), die Halteeinheit(en) (12a, 12b, 12c, 12d), die Schließeinheit (13a, 13b), die drehbare Welle (15) und die Lagerkomponente (16) eine plattenartige oder riegelartige Gestalt aufweisen.

3. Modulare drehbare Bildanzeigevorrichtung nach Anspruch 1 oder 2, wobei die Trägereinheit (17) eine rechteckige Parallelepiped- oder kubische Gestalt aufweist, und
eine Dickendimension der dicksten Abschnitte der Bildanzeigescheibe (10a, 10b, 10c, 10d), der Halteeinheit(en) (12a, 12b, 12c, 12d), der Schließeinheit (13a, 13b), der drehbaren Welle (15) und der Lagerkomponente (16) kleiner ist als jede von einer Breitendimension, einer Höhendimension und einer Tiefendimension der Trägereinheit (17).

4. Modulare drehbare Bildanzeigevorrichtung nach einem der Ansprüche 1 bis 3, wobei die Trägereinheit (17) in einem Inneren davon eine Aufnahmesektion (17d) aufweist, und
die Bildanzeigescheibe (10a, 10b, 10c, 10d), die Halteeinheit(en) (12a, 12b, 12c, 12d), die Schließeinheit (13a, 13b), die drehbare Welle (15) und die Lagerkomponente (16) dazu ausgestaltet sind, in der Aufnahmesektion (17d) aufgenommen zu werden.

5. Modulare drehbare Bildanzeigevorrichtung nach einem der Ansprüche 1 bis 4, ferner umfassend Passsektionen (14a, 14b), die dazu ausgestaltet sind, in Passeingriff mit einer Mitte einer jeden der Schließeinheiten (13a, 13b) gebracht zu werden, wobei die Passsektionen (14a, 14b) die drehbare Welle (15) veranlassen, sich durch die Trommeleinheit (11) hindurch von der Passsektion einer der Schließeinheiten bis zu der Passsektion der anderen der Schließeinheiten zu erstrecken, in einem Zustand, in dem die Enden der Trommeleinheit durch die Schließeinheiten verschlossen werden, wobei,
wenn die modulare drehbare Bildanzeigevorrichtung verwendet werden soll,
die Bildanzeigescheibe (10a, 10b, 10c, 10d) durch die Halteeinheit(en) (12a, 12b, 12c, 12d) in einer zylinderartigen Weise gehalten wird, um die Trommeleinheit (11) zu bilden,
die Enden der Trommeleinheit durch die Schließeinheiten (13a, 13b) verschlossen werden,
die Passsektionen (14a, 14b) zusammen mit der drehbaren Welle (15) in Passeingriff mit den Schließeinheiten (13a, 13b) gebracht werden, um die drehbare Welle zu veranlassen, sich durch die Trommeleinheit (11) hindurch zu erstrecken,
die Lagerkomponente (16) an der Trägereinheit (17) eingerichtet wird, und
die Antriebseinheit (18) angehoben wird, so dass die drehbare Welle drehbar von der Antriebseinheit und der Lagerkomponente (16) getragen wird, um die Drehung der Trommeleinheit zu ermöglichen.

6. Modulare drehbare Bildanzeigevorrichtung nach einem der Ansprüche 1 bis 5, wobei die Halteeinheit(en) (12a, 12b, 12c, 12d) so ausgestaltet ist/sind, dass sie mehrere der Bildanzeigescheiben (10a, 10b, 10c, 10d) in einer rechteckigen zylinderartigen Weise hält/halten, um dadurch die Trommeleinheit (11) zu definieren.

7. Modulare drehbare Bildanzeigevorrichtung nach einem der Ansprüche 1 bis 6, wobei die Bildanzeigescheibe (10a, 10b, 10c, 10d) flexibel und dazu ausgestaltet ist, in einem Zustand, in dem die modulare drehbare Bildanzeigevorrichtung zusammengebaut ist, entfernbar und austauschbar zu sein.

## Revendications

1. Appareil d'affichage d'image rotative modulaire (1) ayant une feuille d'affichage d'image (10a, 10b, 10c, 10d) et configuré pour être assemblé et désassemblé, dans lequel la feuille d'affichage d'image est formée par une feuille de lentille sur laquelle un réseau de lentilles est formé et une image correspondante de lentille qui correspond à la feuille de lentille, l'appareil comprenant :
une ou plusieurs unités de maintien (12a, 12b, 12c, 12d) qui maintiennent la feuille d'affichage d'image (10a, 10b, 10c, 10d) de manière détachable à la manière d'un cylindre et forment ainsi une unité de corps cylindrique (11) ;
une paire d'unités de fermeture (13a, 13b) qui ferment de manière détachable les ouvertures aux deux extrémités de l'unité de corps cylindrique (11) ;
un arbre rotatif (15) qui s'étend de manière amovible à travers un intérieur de l'unité de corps cylindrique à partir de l'une des unités de fermeture jusqu'à l'autre des unités de fermeture ;
une unité de support (17) qui communique une force de rotation à l'arbre rotatif (15) et comprend une unité d'entraînement (18) configurée pour se dresser et pour être inclinée par rapport à l'unité de support ; et
un composant de palier (16) qui supporte, en rotation, une extrémité de l'arbre rotatif pour permettre la rotation d'un corps principal de l'unité de corps cylindrique, dans lequel :
lorsque l'appareil d'affichage d'image rotative modulaire (1) doit être utilisé,
l'unité de corps cylindrique (11) est formée par la feuille d'affichage d'image (10a, 10b, 10c, 10d), l'unité ou les unités de maintien (12a, 12b, 12c, 12d), l'unité de fermeture (13a, 13b) et l'arbre rotatif (15) ;
le composant de palier (16) est installé sur l'unité de support (17) afin de supporter, en rotation, l'extrémité de l'arbre rotatif fait pour s'étendre à travers l'unité de corps cylindrique ; et
l'unité d'entraînement (18) est relevée de sorte que l'autre extrémité de l'arbre rotatif y est couplée pour communiquer la force de rotation à l'arbre rotatif.

2. Appareil d'affichage d'image rotative modulaire selon la revendication 1, dans lequel la feuille d'affichage d'image (10a, 10b, 10c, 10d), l'unité ou les unités de maintien (12a, 12b, 12c, 12d), l'unité de fermeture (13a, 13b), l'arbre rotatif (15) et le composant de palier (16) ont une forme de plaque ou de barre.

3. Appareil d'affichage d'image rotative modulaire selon la revendication 1 ou 2, dans lequel l'unité de support (17) a une forme rectangulaire parallélépipède ou cubique, et
une dimension d'épaisseur des parties les plus épaisses de la feuille d'affichage d'image (10a, 10b, 10c, 10d), de l'unité ou des unités de maintien (12a, 12b, 12c, 12d), de l'unité de fermeture (13a, 13b), de l'arbre rotatif (15) et du composant de palier (16) est inférieure à l'une quelconque parmi une dimension de largeur, une dimension de hauteur et une dimension de profondeur de l'unité de support (17).

4. Appareil d'affichage d'image rotative modulaire selon l'une quelconque des revendications 1 à 3, dans lequel l'unité de support (17) a une section de logement (17d) dans son intérieur, et
la feuille d'affichage d'image (10a, 10b, 10c, 10d), l'unité ou les unités de maintien (12a, 12b, 12c, 12d), l'unité de fermeture (13a, 13b), l'arbre rotatif (15) et le composant de palier (16) sont configurés pour être logés dans la section de logement (17d).

5. Appareil d'affichage d'image rotative modulaire selon l'une quelconque des revendications 1 à 4, comprenant en outre des sections d'ajustement (14a, 14b) configurées pour être amenées en mise en prise d'ajustement avec un centre de chacune des unités de fermeture (13a, 13b), les sections d'ajustement (14a, 14b) permettant à l'arbre rotatif (15) de s'étendre à travers l'unité de corps cylindrique (11) à partir de la section d'ajustement de l'une des unités de fermeture à la section d'ajustement de l'autre des unités de fermeture dans un état dans lequel les extrémités de l'unité de corps cylindrique sont fermées par les unités de fermeture, dans lequel :
lorsque l'appareil d'affichage d'image rotative modulaire doit être utilisé,
la feuille d'affichage d'image (10a, 10b, 10c, 10d) est maintenue par l'unité ou les unités de maintien (12a, 12b, 12c, 12d) à la façon d'un cylindre afin de former l'unité de corps cylindrique (11),
les extrémités de l'unité de corps cylindrique sont fermées par les unités de fermeture (13a, 13b),
les sections d'ajustement (14a, 14b) sont amenées en mise en prise d'ajustement avec les unités de fermeture (13a, 13b) conjointement avec l'arbre rotatif (15) pour que l'arbre rotatif s'étende à travers l'unité de corps cylindrique (11),
le composant de palier (16) est installé sur l'unité de support (17), et
l'unité d'entraînement (18) est relevée de sorte que l'arbre rotatif est supporté, en rotation, par l'unité d'entraînement et le composant de palier (16) pour permettre la rotation de l'unité de corps cylindrique.

6. Appareil d'affichage d'image rotative modulaire selon l'une quelconque des revendications 1 à 5, dans lequel l'unité ou les unités de maintien (12a, 12b, 12c, 12d) est/sont configurée(s) pour maintenir une pluralité de feuilles d'affichage d'image (10a, 10b, 10c, 10d) à la manière d'un cylindre rectangulaire pour définir ainsi l'unité de corps cylindrique (11).

7. Appareil d'affichage d'image rotative modulaire selon l'une quelconque des revendications 1 à 6, dans lequel la feuille d'affichage d'image (10a, 10b, 10c, 10d) est flexible et configurée pour être amovible et remplaçable dans un état dans lequel l'appareil d'affichage d'image rotative modulaire est assemblé.
